# EUROPEAN PATENT APPLICATION

(11) **EP 4 790 609 A1**
(43) Date of publication of application: **12.08.2026**
(21) Application number: 25382099.7
(22) Date of filing: 07.02.2025
(51) Int. Cl.: G06Q 10/047, G06Q 50/43, G08G 1/123

(54) **COMPUTER-IMPLEMENTED METHOD FOR COORDINATING A PASSENGER TRANSIT VEHICLE NETWORK**

(71) Applicant: Blazhko, Kirill, 46500 Sagunto (ES)
(72) Inventor: Blazhko, Kirill, 46500 Sagunto (ES)
(74) Representative: Galbaian S.Coop.

(57) **Abstract**

Computer-implemented method for coordinating a passenger transit vehicle network, wherein the vehicle network comprises a plurality of vehicles operating as part of the passenger transit vehicle network, the passenger transit vehicle network comprising one or more vehicle lines, more than one vehicle transiting on each line, each line having sequentially connected vehicle stops. The method comprises a request receiving step (S10) in which one or more passenger requests are received, each request comprising information associated with an origin location and a desired destination of a respective passenger, an itinerary assigning and grouping step (S11) in which an itinerary based on the vehicle lines is assigned to each passenger and the passengers are grouped in common location passenger groups and common destination passenger groups, an assigning step (S12) in which a common boarding stop, a common exiting stop and at least one vehicle is assigned to passenger groups, an informing step (S13) in which each passenger is informed about the assigned itinerary, and an indication step (S14) in which the assigned vehicle receives an indication of the next vehicle stop.

## Description

### TECHNICAL FIELD

The present invention is related to computer-implemented methods for coordinating a passenger network of vehicles.

### PRIOR ART

Urban transportation systems play a critical role in ensuring mobility within cities. A central component of these systems is the public transportation network, which can be defined as "a system of interconnected routes and modes of transit, such as buses, trains, and subways, that are designed to facilitate the movement of people within and between urban areas" (Hanson & Giuliano, 2017). Such networks are integral to urban planning efforts aimed at enhancing accessibility, reducing congestion and promoting sustainable transportation options.

A well-designed public transportation network, as defined by Van Nes and Bovy (2004), is an "integrated structure of routes, stations, and schedules designed to facilitate the efficient and effective movement of passengers within an urban or metropolitan area". As noted by the Transit Cooperative Research Program (2010), such networks are typically configured to balance speed, coverage and frequency, ensuring that they meet the travel demand across different geographic areas.

In a passenger transit network of buses, buses typically run along bus lines formed from a plurality of sequentially connected stops. In some urban areas it is common having multiple lines, some of which have common stops with each other. A bus running along a line is usually scheduled such that it has a departure time for each stop. However, facts like traffic congestion, dwell time or bus bunching make the bus transit network inefficient from many points of view. Furthermore, public transportation bus services are generally unaware of real-time passenger demand and unable to forecast future passenger demand. In other words, for any given vehicle in service, it is not known how many passengers will board or alight at the next stop. Unable to track passenger demand, reservations, or service capacity, public transportation bus services suffer from inefficiencies such as bus bunching, driving to empty bus stops, and serving urban areas with less demand while neglecting areas where service is needed more. At the same time, those inefficiencies make the public transport bus services less attractive to potential users (longer waiting times, unpredictability, inconvenient bus lines and inconvenient locations of bus stops), which makes attracting new paying users even harder.

WO2007147673A1 discloses a method for providing information to buses on the presence of passengers who want to travel to a particular destination. The method comprises the steps of receiving a request from a passenger to board a bus at the stop for a particular destination; identifying an approaching vehicle going to said particular destination and which would stop at the stop; forwarding said request to board to the identified vehicle; receiving a confirmation from the vehicle informing that said vehicle will stop at the stop to board the passenger; and forwarding to the passenger the confirmation received from the vehicle in response to the request to board.

### DISCLOSURE OF THE INVENTION

The object of the invention is to provide a computer-implemented method for coordinating a passenger transit vehicle network, a bus network control system, a computer program and a non-transitory computer-readable storage medium, as defined in the claims.

A first aspect of the invention relates to a computer-implemented method for coordinating a passenger transit vehicle network, wherein the vehicle network comprises a plurality of vehicles operating as part of the passenger transit vehicle network. The passenger transit vehicle network comprises one or more vehicle lines wherein more than one vehicle transits on each line, each line having sequentially connected vehicle stops. The method comprises:
- a request receiving step in which one or more passenger requests are received, each request comprising information associated with an origin location and a desired destination of a respective passenger;
- an itinerary assigning and grouping step in which an itinerary based on the vehicle lines is assigned to each passenger and the passengers are grouped according to the respective itineraries, the groups comprising at least one common location passenger group and at least one common destination passenger group;
- an assigning step in which a common boarding stop is assigned to the at least one common location passenger group, a common exiting stop is assigned to the at least one common destination passenger group, and at least one vehicle is assigned to the at least one common location passenger group and the at least one common destination passenger group, the common boarding stop, the common exiting stop and the at least one vehicle being assigned according to at least the following parameters:
   ∘ an estimated arrival time of each passenger from the origin location to the common vehicle boarding stop;
   ∘ an estimated arrival time of each passenger from the exiting stop to the desired destination; and
   ∘ the location and the available passenger spots of the vehicle that is going to be assigned;
- an informing step in which each passenger is informed about the assigned itinerary; and
- an indication step in which the assigned vehicle receives an indication of the next vehicle stop that corresponds to the common boarding stop or the common exiting stop.

A second aspect of the invention relates to a bus network control system comprising a passenger module unit configured to communicate with passengers and a vehicle network module unit configured to locate and manage the plurality of vehicles. The system is configured to implement the method of the invention.

A third aspect of the invention relates to a computer program comprising a plurality of instructions which, when the program is executed by a computer, cause the computer to carry out the steps of the method of the invention.

A fourth aspect of the invention relates to a non-transitory computer-readable storage medium comprising a plurality of instructions which, when executed by a computer, cause the computer to carry out the method steps of the invention.

The method of the invention makes it possible to continuously optimize the passengers' needs and the passenger transit vehicle network efficiency. For example, the passenger transit vehicle network obtains a total awareness of the used capacity of the vehicles in the transportation network and of the expected boardings and alighting at each vehicle stop for each vehicle. Regarding the passengers, the invention is able to shorten waiting times for passengers as the vehicles can be more available where they are really needed.

These and other advantages and features of the invention will become apparent in view of the figures and the detailed description of the invention.

### DESCRIPTION OF THE DRAWINGS

Figure 1 shows the flow diagram of a preferred embodiment of the method of the invention.
Figure 2 shows a graphical process flow of a bus in a bus line assigned to several passenger requests according to one embodiment of the invention.
Figures 3A to 3J show a graphical process flow of an example according to one embodiment of the invention.
Figure 4 shows a schematic depiction of an embodiment of a computer configured to implement the method of the invention.
Figure 5 shows an example of a dynamic timetable as a result of the example in Figures 3A to 3J.

### DETAILED DISCLOSURE OF THE INVENTION

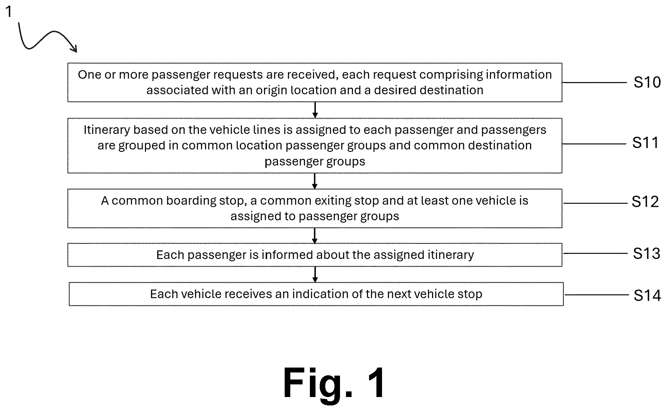

Figure 1 shows the flow diagram of one preferred embodiment of method 1 of the invention.

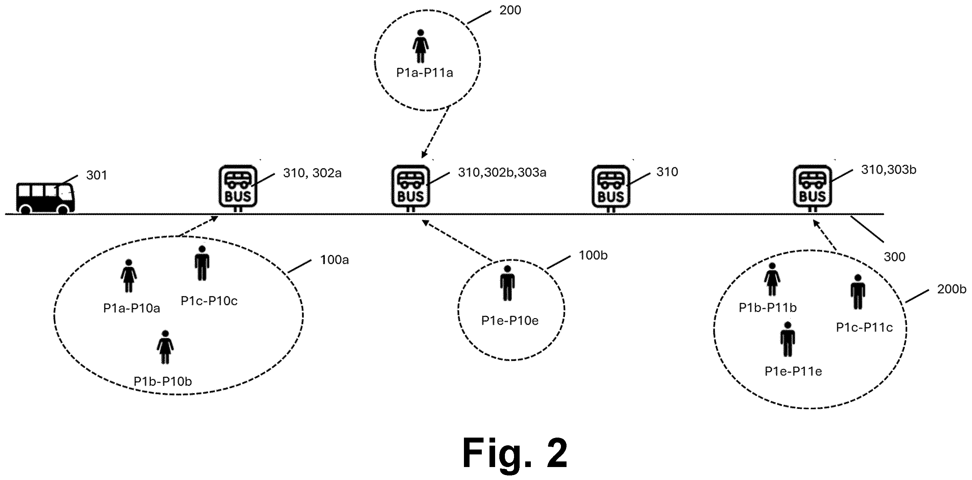

Figure 2 shows a graphical process flow of a vehicle 301, in a vehicle line 300 assigned to several passenger requests according to one preferred embodiment of method of the invention.

The computer-implemented method of the invention is a method for coordinating a passenger transit vehicle network, wherein the vehicle network comprises a plurality of vehicles operating as part of the passenger transit vehicle network, the passenger transit vehicle network comprising one or more vehicle lines and more than one vehicle transiting on each line, each line having sequentially connected vehicle stops. Passenger transit vehicle network or passenger transportation network can be used indistinctly.

In a preferred embodiment, each vehicle stop is a preassigned vehicle stop of the vehicle line. Vehicle lines can share vehicle stops.

The method comprises the following steps:
- A request receiving step S10 in which one or more passenger requests are received. Each request comprises information related with an origin location P10a-P10e and a desired destination P11a-P11e of each passenger P1a-P1e. The origin location P10a-P10e may be the current location of the passenger or a desired location of the passenger. The request may also include other information like the number of passengers, the expected boarding time of the passenger for example.
- An itinerary assigning and grouping step S11 in which an itinerary based on the available vehicle lines is assigned to each passenger P1a-P1e. The method makes multiple combinations of hypothetical itineraries that suit to each passengers P1a-P1e. Then passengers P1a-P1e are grouped according to the respective itineraries. Each passenger P1a-P1e then is assigned to one common location passenger group 100a,100b and one common destination passenger group 200a,200b. In the context of the invention itinerary means the part of the vehicle line or combination of parts of vehicles lines that can suit to the passenger request. In this step there might be more than one option of itineraries for the passenger. The assigned itinerary will depend on the step S12.
- An assigning step S12 in which a common boarding stop 302a, 302b is assigned to the at least one common location passenger group 100a, 100b, a common exiting stop 303a, 303b is assigned to the at least one common destination passenger group 200a,200b, and at least one vehicle 301 is assigned to the at least one common location passenger group 100a, 100b and the at least one common destination passenger group 200a,200b. The common boarding stop, the common exiting stop and the at least one vehicle are assigned according to at least the following parameters:
   ∘ an estimated arrival time of each passenger P1a-P1e from the origin location P10a-P10e to the common vehicle boarding stop 302a, 302b;
   ∘ an estimated arrival time of each passenger P1a-P1e from the exiting stop 303a, 303b to the desired destination P11a-P11e; and
   ∘ the location and the available passenger spots of the vehicle 301.
- An informing step S13 in which each passenger P1a-P1e is informed about the assigned itinerary. The information about the assigned itinerary includes information like the assigned common boarding stop, the assigned vehicle 301, the departure time from the boarding stop, the trip duration, the assigned common exiting stop 303a, 303b, and may include instructions regarding how to arrive to the boarding stop or the destination from the exiting stop.
- An indication step S14 in which the assigned vehicle 301 receives an indication of the next vehicle stop that corresponds to the common boarding stop 302 or the common exiting stop 303. Thus, although the vehicle driver might know the location of the sequentially connected vehicle stops, the driver will just stop in those vehicle stops that have been activated or assigned as the common boarding stop 302a, 302b or the common exiting stop 303a, 303b. In a preferred embodiment, the vehicle 301 receives the indication of the next vehicle stop in real time. Depending on the number of boarding or alighting passengers, it is helpful to indicate the dwell time, therefore, in one embodiment, the method comprises also the step of indicating the waiting time at each vehicle stop. This indication may be done by notifying the departure time from each stop. In some cases like, for example, for avoiding vehicle bunches, it is good to control the speed circulation of vehicles or of a certain vehicle. Thus, in one embodiment, the method comprises an indication step of circulation speed to the vehicle.

In a preferred embodiment the common boarding stop 302 and the common exiting stop 303 are assigned also according to the number of passengers that can reach the common boarding stop 302 or the common exiting stop 303, prioritizing the common boarding stop 302 or the common exiting stop 303 with the largest number of reaching passengers. Therefore, the efficiency of each vehicle of the transit network is improved. The method is able to activate or deactivate vehicle stops to increase the density of vehicle stops and add more deactivated bus stops to the network.

The vehicle is any vehicle in a transportation network, such as a bus, train or boat that is capable of carrying multiple passengers. In a preferred embodiment, the vehicle is a bus.

The vehicle line is an established route for vehicles.

The vehicle stop is a location where the vehicles stop to allow passengers to board and alight the vehicle. In a preferred embodiment, the vehicle stops are preestablished on the vehicle line.

Depending on the passenger request, each passenger may be assigned to more than one line and vehicles. Thus, the method identifies the need of a transfer of the passenger from one vehicle to another vehicle, each vehicle circulating in different lines. In this embodiment, the passenger will have two boarding stops and two exiting stops.

In a preferred embodiment, the method comprises a booking step in which each passenger books the assigned itinerary. In a preferred embodiment, each passenger books and pays for the itinerary.

In one embodiment, when there is a new passenger request or there is new information about the traffic or the status of the ongoing vehicle fleets of the vehicle network, like bus bunching for example, the method dynamically applies or triggers again the method steps considering the ongoing requests and/or the ongoing trips and/or at least the previously listed information. As a result, the method reassigns the vehicle, or the common bus boarding stop or the common exiting stop for each common location passenger group or each destination passenger group. If there has been a change, the passenger is informed about the new assigned common boarding stop, the new assigned vehicle, the new departure time or the new assigned common exiting stop, whatever is appropriate.

As a consequence, the method is continuously optimizing the passengers' needs and the passenger transit vehicle network. Applying the method, the passenger transit vehicle network will be able to have a total awareness of the used capacity of the vehicles in the transportation network and of the expected boardings and alighting at each vehicle stop for each vehicle. Based on such information, the method comprises the steps of:
- Calculating the total combined walking distance of several passengers in one area to select the bus stop ahead of the next vehicle where more passengers will be able to board and/or exit, allowing the vehicle to stop less frequently and stop at more populated stops.
- Temporarily re-assigning vehicles to vehicle lines with stronger passenger demand, that is, with a bigger number of requested reservations or trips.
- Shortening certain vehicle lines by instructing the vehicle to skip visiting one or more last vehicle stops if said vehicle stops were not assigned as a common boarding stop or common exiting stop.
- Instructing vehicles to avoid slowing down at the upcoming empty (not assigned) bus stops.
- Instructing vehicles to stay at certain stops longer if it is known that passengers are to arrive soon.
- Calculating for each vehicle the time that each vehicle will spend at each bus stop (dwell time) based on the known number of boarding and/or alighting passengers and use said calculations to accurately plan the arrival and the departure time for each vehicle at each bus stop.

The method can lead to shortening of waiting times for passengers as the vehicles can be more available where they are really needed.

Another aspect of the invention relates to a vehicle network control system comprising a passenger module unit configured to communicate with passengers and with a vehicle network module unit configured to locate and manage the plurality of vehicle. The system is configured to implement the method according to the method of the invention.

In one embodiment, the vehicle network module unit is configured to locate and manage the plurality of vehicles operating as part of the passenger transit vehicle network and to give instructions to the vehicle or the vehicle driver.

In one embodiment, the passenger module unit is configured to obtain the passenger requests for a vehicle trip. This passenger module is configured also to give information to the passenger about the assigned vehicle(s), the location of the boarding stop, the destination stop, the departure time or the trip itinerary, duration and also the walking route to the boarding stop or the destination stop.

In one embodiment, the bus network control system is configured to store historical data of the method and use a machine learning technique.

The machine learning technique may be, for example, a neural network, random forest model, regression model, or other suitable machine learning technique. The machine learning technique may include a convolutional neural network (CNN), a long short-term memory model, or a residual network (ResNet). The inputs to the machine learning technique may be any one or more of: a generated dynamic timetables, generated passenger vehicle itineraries, generated passenger itineraries, a time series of historical vehicle occupancy; a distance between vehicle stops; GPS travel logs from one or more vehicle; a time of day; a day of week; weather conditions and/or passenger's requests with the requested origin location and a desired destination.

Using machine learning is advantageous in that predictions can be made more accurate and efficient when large volumes of data are being considered, as the machine learning algorithms are able to easily identify trends and patterns in that data and continually improve in accuracy and efficiency as more data is processed by the algorithms over time.

The various components of the bus network control system can be provided as one of more pieces of computer operating on one or more computing devices. For example, the bus network control system may be implemented on a server or cluster of servers and the various components instantiated as software running on the server or across the cluster of servers. In other examples the system may be a distributed computer network and some or each of the components may be implemented as discrete computing devices.

In one embodiment, the bus network control system comprises at least one of the several components:
- An individual passenger spot database configured to store information about all passenger spots (passenger seats and standing places) that exist in vehicles. It includes information such as passenger spot type, vehicle that it belongs to, statuses (available, reserved, not available), relational data such as which reservations are assigned to it and at which dates and times, and optional features, among other information.
- An individual passenger spot reservation module configured to use individual passenger spot database to track and manage passenger spots as an inventory. It is configured to implement a life cycle flow for passenger spots by creating, reading, updating and deleting statuses (available, reserved, not available) and allowing their reservation by passengers.
- A passenger spot real-time connecting reservation module configured to use the individual passenger spot reservation module to reserve passenger spots in several vehicles (and thus multiple segments) for each reserved trip (connecting reservations for connected segments).
- A bus stop inventory database configured to store information about all bus stops in the transportation network, including information about their status (not activated, activated, not available, etc.), location, optional facilities, and signage, among other information.
- A bus stop activator module configured to use the bus stop database to track and manage bus stops as inventory. It is configured to implement a life-cycle flow for bus stops by creating, reading, updating and deleting their statuses (not activated, activated, not available, etc.) and allowing their activation and deactivation.
- A requests database configured to store information about all requests sent towards the system (passenger and their attributes, origin with attributes, destination with attributes, date and time of request), as well as the status of each request (active, completed, canceled, archived).
- A requests management sub-system configured to use the requests database to manage requests. It is configured to implement a life cycle flow requests by creating, reading, updating and deleting requests and their attributes in the requests database.
- A dynamic timetable component configured to use data from the individual passenger spot database, the individual passenger spot reservation module, the individual passenger spot connected reservation module for real-time departures, the bus stop database, the bus stop activator module, and the requests management sub-system to manage (create, read, update, delete) the dynamic timetables for vehicles and passengers in the system. Since it might take some time to receive reservation requests from passengers, it is configured to process them and communicate back the newly generated dynamic timetables (including new vehicle itineraries and new passenger itineraries), the dynamic timetable component is configured to generate dynamic timetables that start (commence) at some point in the future.
- A vehicle tracking sub-system configured to collect and store collects real-time and soft real-time location data for all vehicles in the system (location, coordinates, speed, direction).
- A vehicle itinerary module configured to use dynamic timetables to create vehicle Itineraries for each specific vehicle in the system. It is configured to communicate the itinerary stages (next stop, scheduled arrival time, scheduled departure time) and to track vehicles following those itineraries (by using data from vehicle location tracking module). It is configured to issue alerts to the system and to a vehicle driver if the vehicle falls behind or runs ahead the current vehicle itinerary or is expected to do so.
- A billing module configured to manage (create, read, update, delete) billing operations connected to user accounts of passengers in the system (top up, charge, apply discounts to balance and other transactions through create, read, update, delete actions).
- A connected reservation planner configured to allow passengers to plan their journeys by entering their desired start and end locations. The connected reservation planner is configured to poll connected the passenger spot real-time reservation module and/or the dynamic timetable component for capacity needed to complete the requested journey. It is configured to provide one or more trip options, including the estimated travel time, transfers, and walking distances. Passengers, therefore, have an option to select one of the provided trip options and make a reservation with the system.
- A passenger itinerary module configured to use dynamic timetables created by the dynamic timetable component to create passenger itineraries. For each individual passenger is configured to provide a passenger itinerary that includes all stages of a trip and actions needed to be done by the passenger: wait for a notification, walk to the bus stop, board a certain Vehicle, take a certain passenger spot in the vehicle, ride, alight at a certain time and/or location, transfer or connection (if needed), walk from the bus stop to the destination location.
- A dynamic travel assistant configured to provide soft real-time or real-time guidance to each passenger based on the information contained in their respective passenger itinerary. The main objective of the passenger travel assistant is to communicate to the passenger what the passenger shall do now and what the passenger shall do next, according to the specific passenger itinerary. Moreover, as the dynamic timetables generated by the dynamic timetable component can change any time, so can passenger itineraries. Therefore, the passenger travel assistant can be configured to alert a passenger when such updates happen or it can be configured to show only the most imminent action and stage of the passenger itinerary.
- A check-in sub-system configured to assist the system in tracking each individual reservation and its progress along its passenger Itinerary (and its stages) by providing an automatic and/or manual check-in (and check-out) functionality for each passenger boarding or alighting a vehicle. In addition to communicating to the system which passenger spots and with which status value shall be updated in the individual passenger spot database, it is also configured to provide information on which passengers have already boarded and/or alighted from each vehicle at if they have done it according to the scheduled time. The automatic check-in (and check-out) of passengers can be implemented with the following technologies: infra-red human detection, Bluetooth, face recognition, movement sensors, or a combination of those. The check-in sub-system can also allow manual check-ins by passengers. Check-in in another vehicle can trigger an automatic check-out from previously checked in vehicles.
- A vehicle driver terminal for vehicle drivers (human or machine) configured to communicate with the system. Its main objective is to convey the current vehicle itinerary specific to each given vehicle.
- A passenger terminal for passengers configured to communicate with the system. Its main objective is to convey the current passenger itinerary specific to each given passenger.

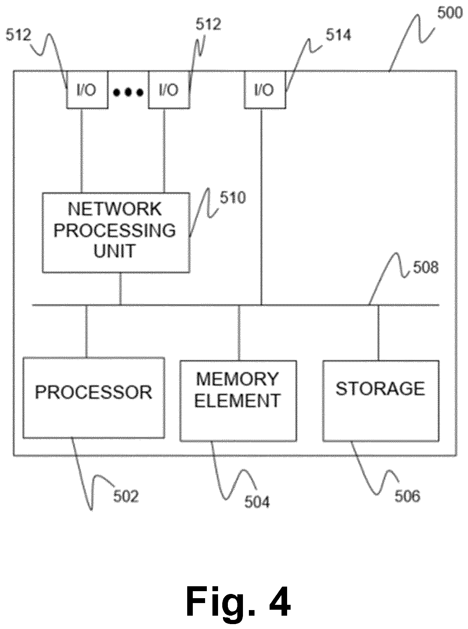

Figure 4 shows a schematic depiction of an embodiment of a computer 500 configured to implement the method 1 of the invention or to provide the bus network control system. In at least one embodiment, the computer 500 used to implement the method 1 of the invention may include one or more processors 502, one or more memory elements 504, storage 506, a bus 508, one or more network processor units 510 interconnected with one or more network input/output (I/O) interfaces 512, one or more I/O interfaces 514, and a computer program.

The computer program comprises a plurality of instructions which, when executed by the processor 502, cause the processor 502 to execute the steps of the method 1 of the invention. In at least one embodiment, the processor or processors 502 are at least a hardware processor configured to execute various tasks, operations, and/or functions for the computer 500 according to the software and/or the instructions configured for the computer 500, for example, in the computer program.

In at least one embodiment, the memory element(s) 504 and/or storage 506 are configured to store data, information, software, and/or instructions associated with the computer 500, and/or logic configured for the memory element(s) 504 and/or storage 506. In one embodiment of the computer 500, the computer program is stored in any combination of memory element(s) 504 and/or storage 506.

In one embodiment of method 1 of the invention, data necessary to implement the method 1, such as the ones described before, is stored in any combination of memory element(s) 504 and/or storage 506.

In at least one embodiment, the bus 508 may be configured as an interface that allows one or more elements of the computer 500 to communicate with each other to exchange information and/or data. The bus 508 may be implemented with any architecture designed to exchange control, data, and/or information between processors, memory/storage elements, peripheral devices, and/or any other hardware and/or software components that may be configured for the computer 500. In at least one embodiment, the bus 508 may be implemented as a rapid interconnection housed in the core, potentially using shared memory between processes (e.g., logic), which may allow efficient communication routes between processes.

In various embodiments, the network processor unit(s) 510 may enable communication between the computer 500 and other systems, entities, etc., via the network I/O interface(s) 512 (wired and/or wireless). In various embodiments, the network processor unit(s) 510 may be configured as a combination of hardware and/or software, such as one or more Ethernet controllers and/or interface controllers or cards, Fibre Channel (e.g., optical) driver(s) and/or controller(s), wireless receivers/transmitters/transceivers, baseband processor(s)/modem(s) and/or other similar network interface driver(s) and/or controller(s) now known or hereinafter developed to enable communications between the computer 500 and other systems, entities, etc. to facilitate the operations for the various embodiments of method 1 described herein. In various embodiments, the network I/O interface(s) 512 may be configured as one or more Ethernet ports, Fibre Channel ports, any other I/O port(s) and/or antenna(s)/antenna array(s) now known or hereafter developed. Thus, network processor unit(s) 510 and/or network I/O interface(s) 512 may include interfaces suitable for receiving, transmitting and/or otherwise communicating data and/or information in a network environment.

The I/O interfaces 514 allow input and output of data and/or information with other entities that may be connected to the computer 500. For example, the I/O interfaces 514 may provide a connection to external devices such as a keyboard, keypad, touch screen, and/or any other suitable input and/or output device now known or developed in the future. In some cases, the external devices may also include computer-readable (non-transitory) storage media such as database systems, USB memories, portable optical or magnetic disks, and memory cards. Still in some cases, external devices may be a mechanism for displaying data to a user, such as, for example, a computer monitor, display screen, or the like.

In various embodiments, the computer program can include instructions that, when executed, cause the processor(s) 502 to perform operations, which can include, but are not limited to, providing general computer control operations, interacting with other entities, systems, etc. described herein, maintain and/or interact with stored data, information, parameters, etc. (e.g., memory element(s), storage, data structures, databases, tables, etc.); combinations thereof; and/or the like to enable execution of operations necessary for the implementation of the method 1 of the invention.

In some cases, the computer program of the present embodiments may be available via a non-transitory computer-readable storage medium (e.g., magnetic or optical media, magnetooptical media, CD-ROM, DVD, memory devices, etc.). In some cases, non-transitory computer-readable storage media may also be removable. Other examples may include optical and magnetic disks, USB memories and smart cards that can be inserted into and/or otherwise connected to a computer for transfer to another computer-readable storage medium.

In one embodiment, the computer program runs in a distributed environment, i.e., part of the computer program runs on a first computer 500, and part of the computer program runs on a second computer, both computers 500 communicating with each other.

Another aspect of the invention relates to a computer program comprising a plurality of instructions which, when the program is executed by the computer 500, cause the computer 500 to carry out the steps of the method 1 of the invention.

Another aspect of the invention relates to a computer-readable storage medium comprising a plurality of instructions which, when executed by the computer 500, cause the computer 500 to carry out the steps of the method 1 of the invention.

The following are illustrative examples which demonstrate the features and advantages of the invention, but are not to be construed as limiting the subject matter of the invention as defined in the claims.

### Example:

### Method of using System

Proposed Solution is organized around serving passengers of mass urban transit by making reservations of specific Passenger Spots in one or more specific vehicles operating within a transportation network, and the reservations are done for a specific time (time slots) for each passenger spot in each vehicle and between a specific origin vehicle stop and a specific destination vehicle stop.

Since static timetables usually assume that dwell times are always the same (which is far from reality), they do not include arrival times. Dwell times can make a difference in terms of transportation network capacity.

As the proposed system can afford to activate and deactivate bus stops, it is possible to increase the density of bus stops and add more deactivated bus stops to the network.

The proposed system considers all bus stops existing in the transportation network as disabled.

We describe the method of using the proposed system where the dynamic timetable component generates dynamic timetables.

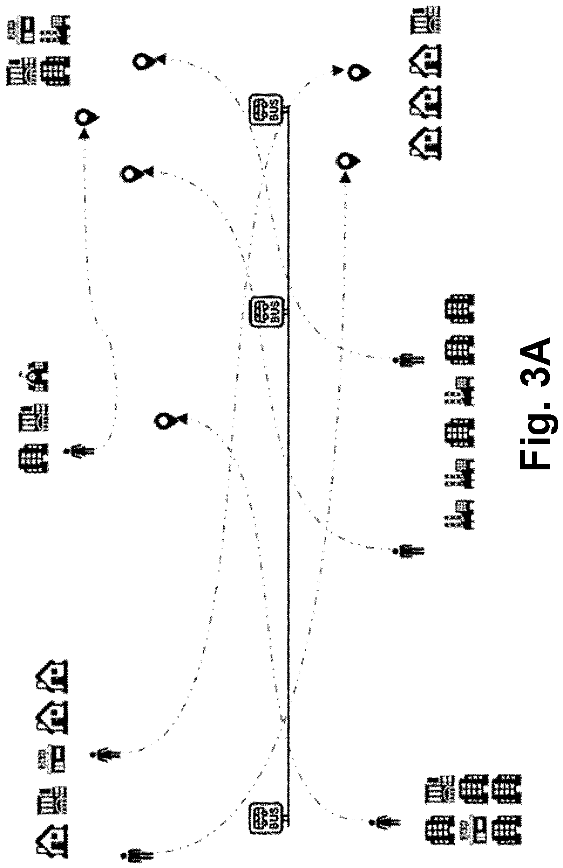

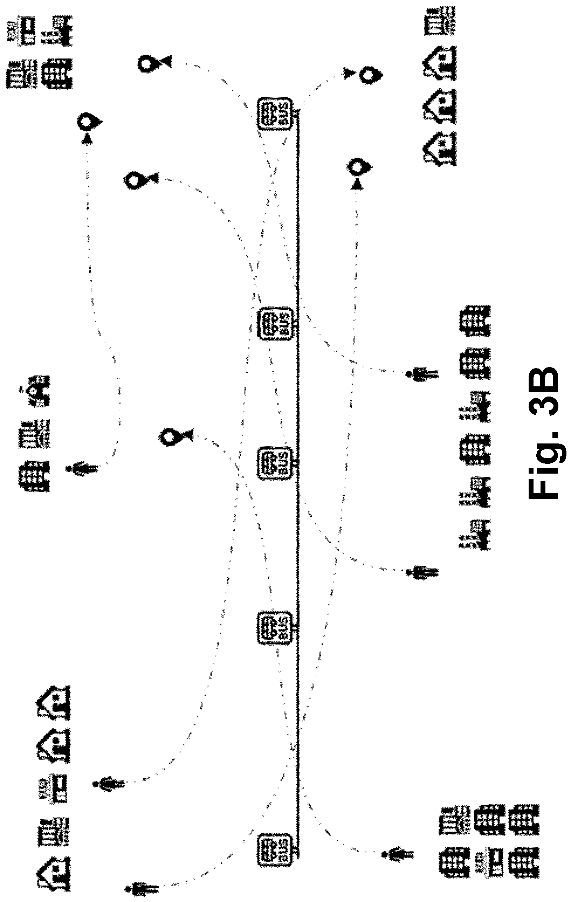

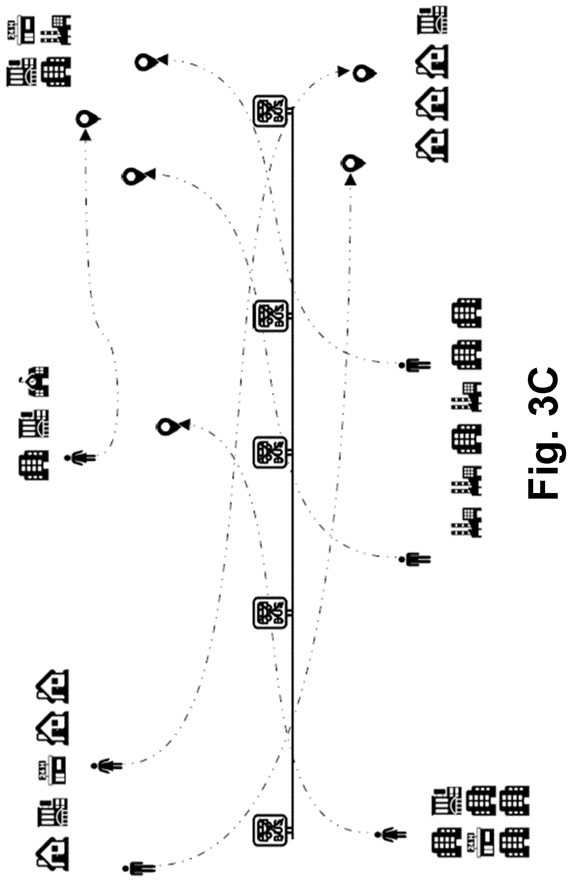

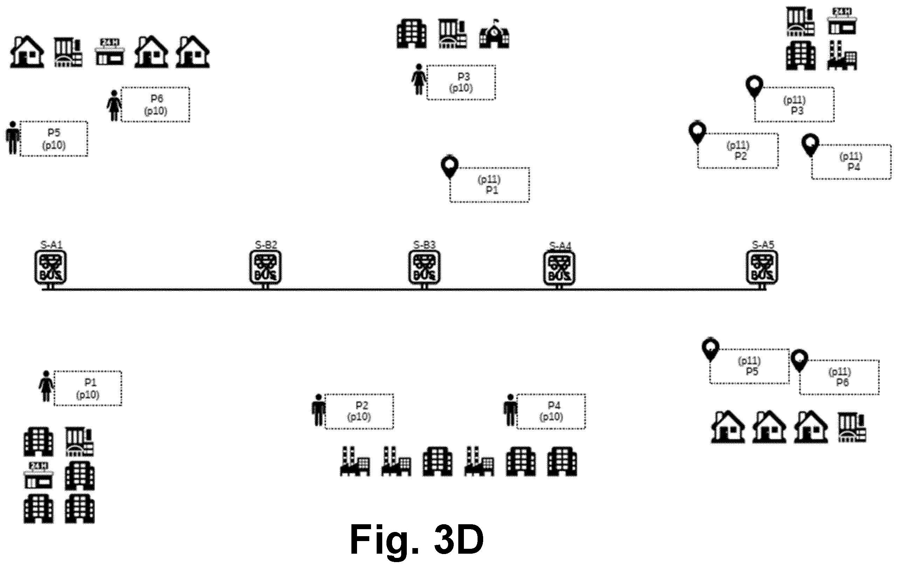

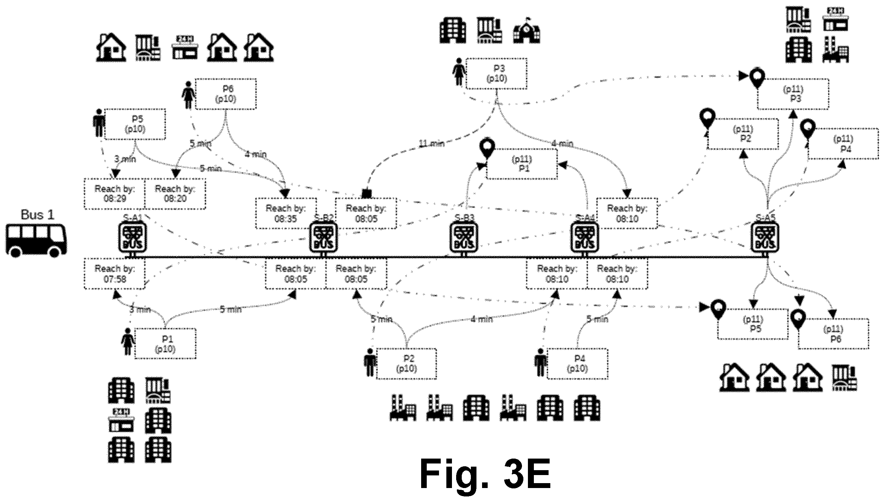

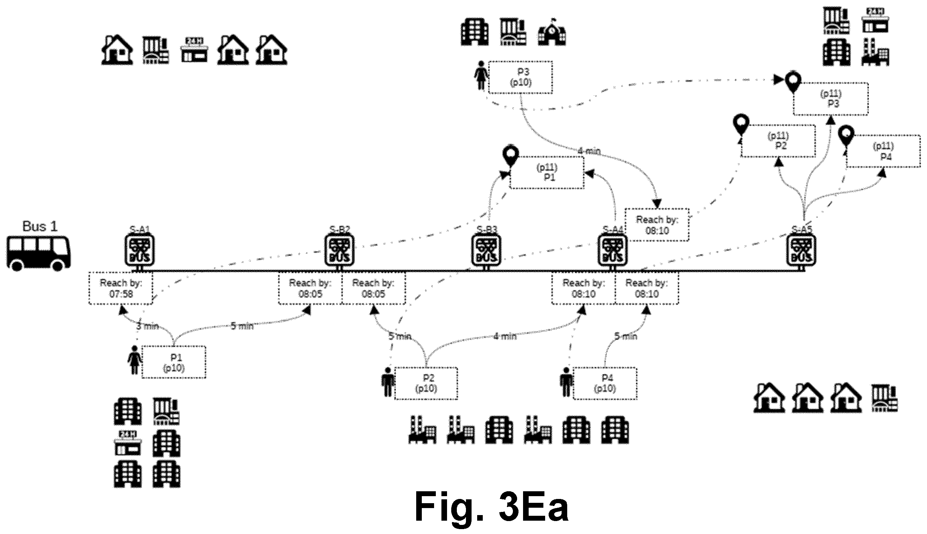

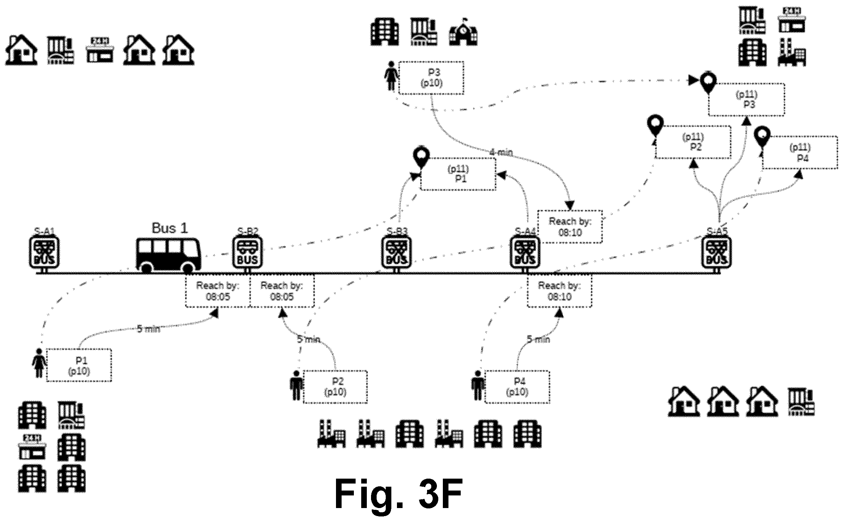

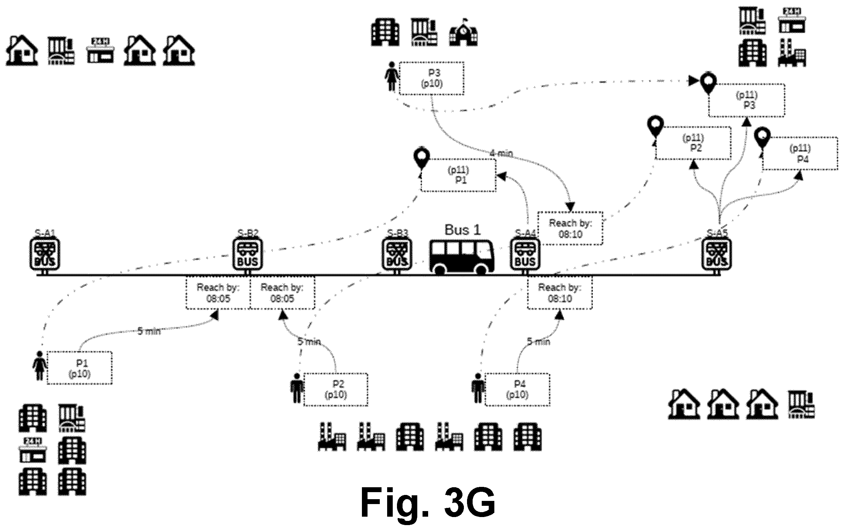

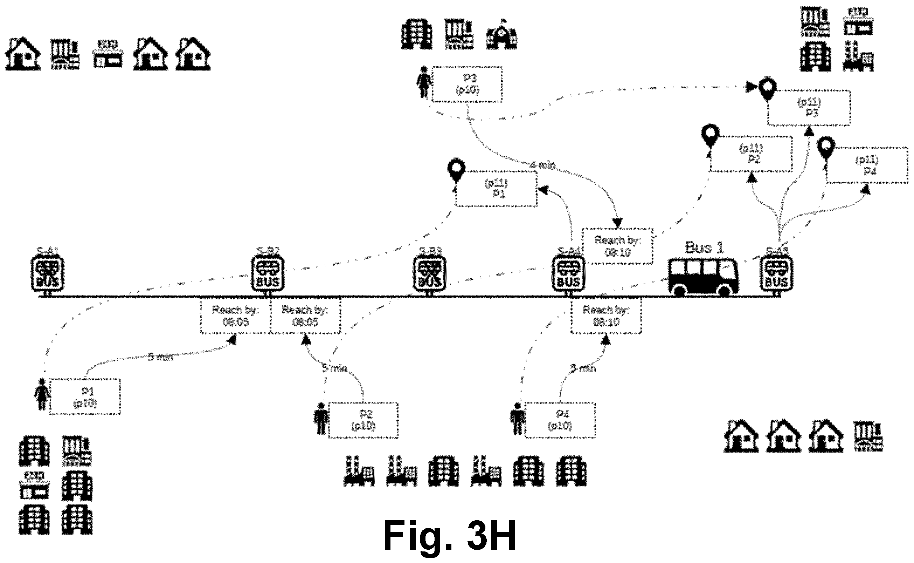

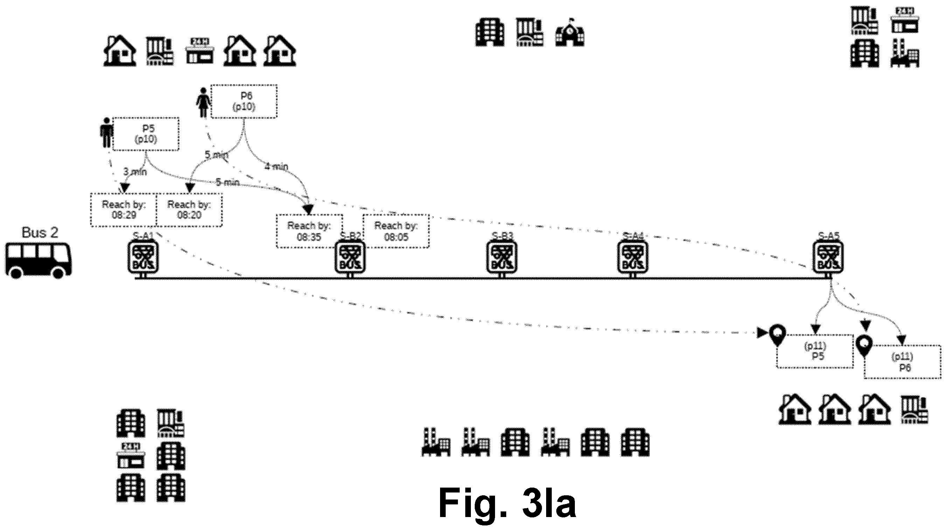

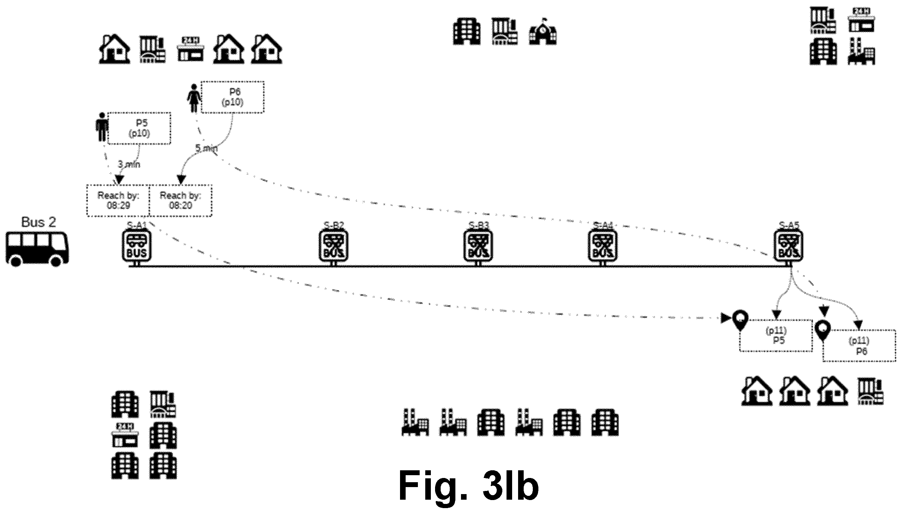

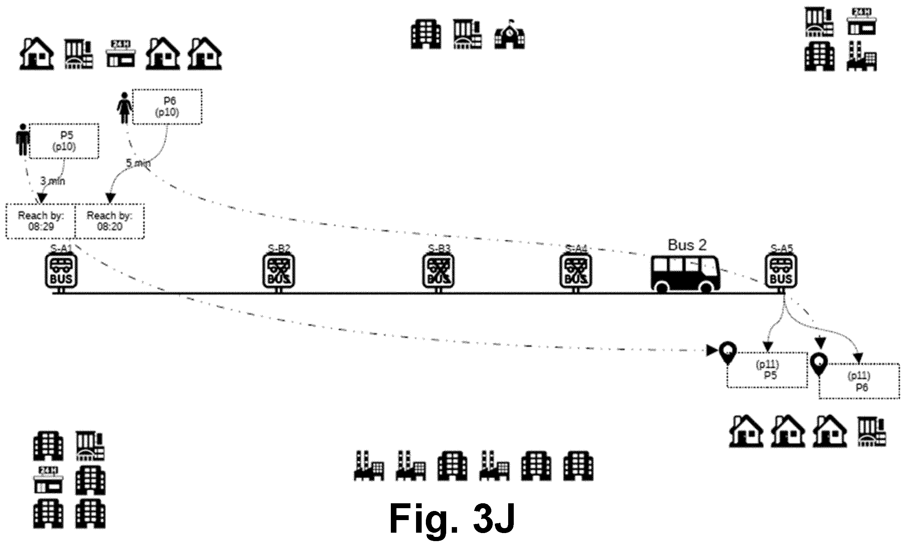

Figures 3A to 3J show the different steps of the method in the provided example. We assume the following:
- There is a plurality of requests from several passengers to go to different destinations and there is a bus line 300 in vicinity of their origins and destinations, as shown in Figure 3A.
- The maximal allowed walking distance is 10 minutes.
- For clarity, Figure 3 shows only one example of a distance longer than 10 minutes (Passenger P3 to bus stop S-B2). All walking distances that are not illustrated with arrows are assumed to be longer than 10 minutes.
- Passengers P5 and P6 place their requests later than other passengers, therefore the times by which they can reach the respective bus stops are later.
- Average boarding or alighting time per passenger is 15 seconds.
- Forced waiting is disabled.
- Forced delay is disabled.

Triggered by new passenger requests (or other events like request cancellations), the system proceeds to generate a plurality of dynamic timetables for the transportation network:
- Unlike with other transport systems with fixed bus stops infrastructure, the proposed system can operate on a significantly larger number of bus stops that it can activate and deactivate (as demonstrated below). As shown in Figure 3B, the proposed system has more potential bus stops which can be relatively close to each other. They all start in the system in the deactivated state, as shown in Figure 3C.
- All bus stops 310 are stored in the Bus Stops Inventory Database, with their own unique identifiers SA1-SA5 (Figure 3D).
- Connected Reservation Planner informs the system about new requests for reservations from passengers (requests).
- The system processes each request from each passenger, including the desired origin and destination locations, and identifies a plurality of bus stops that the passenger can go to (to board a bus) from their desired origin and to walk from (when alighting the bus) to their desired destination. This step is managed by Requests Management Sub-System, as shown in Figure 3E.
- Then the system creates a plurality of Dynamic Timetables, considering the data on passengers' requests (origins and destinations), reachable bus stops, vehicles and existing timetables.
- For each vehicle in the transportation network, it attempts to perform bus stop activation, facilitated by dynamic timetable component:
   ∘ **Bus 1.**
      ▪ Add next move instruction. Bus 1 gets an instruction to continue following the static timetable. This confirms the arrival time of Bus 1 at bus stop S-A1 at 07:59 and a departure time at 08:00.
      ▪ There are requests to process (P1, P2, P3, P4) so the system continues processing (Figure 3Ea).
      ▪ The nearest passenger at this stage is P1.
      ▪ It is too far for P1 to walk to bus stops S-A3 and S-A4, so only the reachable bus stops S-A1 and S-B2 get selected.
      ▪ P1 can reach bus stop SA-1 and bus stop SB-2, before Bus 1 will depart from them, therefore they get selected.
      ▪ System sorts bus stops S-A1 and S-B2 and S-B2 ends up at the top, as it can be also reached by passenger P2 before passenger P1 will depart with Bus 1.
      ▪ Since there is only one bus stop with the same number of reaching passengers, there is no need to sort by the shortest combined walking distance; bus stop S-B2 gets selected.
      ▪ Bus stop S-B2 gets activated and its attributes get updated:
         - Arrival time: 08:05
         - Dwell time: (2*30) = 30 seconds
         - Departure time: Arrival time + Dwell time = 08:05:30
      ▪ Requests of P1, P2 are not marked as processed yet, as their boarding bus stops were not identified yet.
      ▪ Bus 1 gets its occupancy attribute updated with respective requests.
      ▪ Bus stop SB-2 gets saved to the dynamic timetable.
      ▪ Improvement (Figure 3F). Instead of stopping at 2 bus stops S-A1 and S-B2, Bus 1 will only stop at 1 bus stop S-B2:
         - Slow-down at S-A1 gets eliminated.
         - Dwell time at bus stop S-A1 gets eliminated.
         - Dwell time at bus stop S-B2 gets calculated as an exact time based on the number of served passengers instead of using an irrelevant dwell time value from a static timetable.
      ▪ There are still requests to process (P1 (aligting), P2 (aligting), P3, P4) so the system continues processing.
      ▪ The nearest passenger at this stage is again P1 who needs to alight.
      ▪ It is too far for P1 to walk from bus stop S-A5, so only bus stops S-B3 and S-A4 get selected.
      ▪ Since passenger P1 is already on-board of Bus 1, both bus stops S-B3 and S-A4 get selected.
      ▪ System sorts bus stops S-B3 and S-A4, and S-A4 ends up at the top, as it can be also reached by passengers P3 and P4 (to board).
      ▪ Since there is only one bus stop with the same number of reaching passengers, there is no need to sort by the shortest combined walking distance; bus stop S-A4 gets selected.
      ▪ Bus stop S-A4 gets activated and its attributes get updated:
         - Arrival time: Departure time from the previous activated bus stop + distance = 08:09:30
         - Dwell time: (3*30) = 90 seconds = 1,5 minutes
         - Departure time: Arrival time + Dwell time = 08:11
      ▪ Request P1 gets marked as processed.
      ▪ Bus 1 gets its occupancy attribute updated with respective requests.
      ▪ Bus stop S-A4 gets saved to the Dynamic Timetable.
      ▪ Improvement (Figure 3G). Instead of stopping at 2 bus stops S-B3 and S-A4, Bus 1 will only stop at 1 bus stop S-A4:
         - Slow-down at S-B3 gets eliminated.
         - Dwell time at bus stop S-B3 gets eliminated.
         - Dwell time at bus stop S-A4 gets calculated as an exact time based on the number of served passengers instead of using an irrelevant dwell time value from a static timetable.
      ▪ There are still requests to process (P2 (alighting), P3 (alighting), P4 (alighting)) so the system continues processing.
      ▪ The nearest passenger at this stage is P2 (alighting).
      ▪ Since only bus stop S-A5 is available to Bus 1, it gets selected.
      ▪ The same bus stop S-A5 can serve passengers P2, P3 and P4.
      ▪ Bus stop S-A5 gets activated and its attributes get updated:
         - Arrival time: Departure time from the previous activated bus stop + distance = 08:16
         - Dwell time: (3*30) = 90 seconds = 1,5 minutes
         - Departure time: Arrival time + Dwell time = 08:17:30
      ▪ Request P2, P3, and P4 get marked as processed.
      ▪ Bus 1 gets its occupancy attribute updated with respective requests.
      ▪ Bus stop S-A5 gets saved to the Dynamic Timetable.
      ▪ Improvement (Figure 3H). Bus 1 will only stop at 1 bus stop S-A5:
         - Dwell time at bus stop S-A5 gets calculated as an exact time based on the number of served passengers instead of using an irrelevant dwell time value from a static timetable.
      ▪ There are no more bus stops ahead for Bus 1.
      ▪ The system adds a final move instruction, for example standby at the current stop.
      ▪ The system marks Bus 1 as processed.
   ∘ There are still requests without passenger itineraries, and the system proceeds to the next vehicle.
   ∘ **Bus 2.**
      ▪ Add next move instruction. Bus 2 gets an instruction to continue following the static timetable. This confirms the arrival time of Bus 1 at bus stop SA-1 at 08:29 and a departure time at 08:30 (Figure 3Ia).
      ▪ There are requests to process (P5, P6) so the system continues processing.
      ▪ The nearest passenger at this stage is P5.
      ▪ It is too far for P5 to walk to bus stops S-B3, S-A4, and S-A5, so only the reachable bus stops S-A1 and S-B2 get selected.
      ▪ P5 can reach bus stop S-A1 and bus stop S-B2, before Bus 2 will depart from them, therefore they get selected.
      ▪ System sorts bus stops S-A1 and S-B2 and none of them ends up at the top, as both can also be reached by passenger P6 before passenger P5 will depart with Bus 2.
      ▪ System sorts bus stops S-A1 and S-B2 by the shortest combined walking distance and bus stop S-A1 ends at the top, because the shortest combined walking distance for S-A1 is 8 minutes (3 min + 5 min), while the shortest combined walking distance for S-B2 is 9 minutes (5 min + 4 min).
      ▪ Bus stop S-A1 gets activated and its attributes get updated:
         - Arrival time: 08:29
         - Dwell time: (2*30) = 30 seconds
         - Departure time: Arrival time + Dwell time = 08:29:30
      ▪ Requests of P5, P6 are not marked as processed yet, as their alighting bus stops were not identified yet.
      ▪ Bus 2 gets its occupancy attribute updated with respective requests.
      ▪ Bus stop S-A1 gets saved to the Dynamic Timetable.
      ▪ Improvement (Figure 3Ib). Instead of stopping at 2 bus stops S-A1 and S-B2, Bus 2 will only stop at 1 bus stop S-A1:
         - Slow-down at S-B2 gets eliminated.
         - Dwell time at bus stop S-B2 gets eliminated.
         - Dwell time at bus stop S-A1 gets calculated as an exact time based on the number of served passengers instead of using an irrelevant dwell time value from a static timetable.
      ▪ There are still requests to process (P5 (alighting), P6 (alighting)) so the system continues processing.
      ▪ The nearest passenger at this stage is P5 (alighting).
      ▪ Since only bus stop S-A5 can serve current passengers P4, P5, it gets selected.
      ▪ Bus stop S-A5 gets activated and its attributes get updated:
         - Arrival time: Departure time from the previous activated bus stop + distance = 08:43:30. Additionally, to calculate travel time from the previous bus stop, the following parameters can be used: distance, average speed, traffic, traffic signs and traffic lights.
         - Dwell time: (3*30) = 90 seconds = 1,5 minutes
         - Departure time: Arrival time + Dwell time = 08:45:00
      ▪ Requests P5, P6 get marked as processed.
      ▪ Bus 2 gets its occupancy attribute updated with respective requests.
      ▪ Bus stop S-A4 gets saved to the Dynamic Timetable.
      ▪ Improvement (Figure 3J). Instead of stopping at 3 bus stops S-B3, S-A4 and S-A5, Bus 2 will only stop at 1 bus stop S-A5:
         - Slow-down at 2 bus stops S-B3 and S-A4 gets eliminated.
         - Dwell time at 2 bus stops S-B3 and S-A4 gets eliminated.
         - Dwell time at bus stop S-A5 gets calculated as an exact time based on the number of served passengers instead of using an irrelevant dwell time value from a static timetable.
            ▪ There are no more bus stops ahead for Bus 2 and no more unprocessed requests.
            ▪ The system adds a final move instruction, for example standby at the current stop.
            ▪ The system marks Bus 2 as processed.

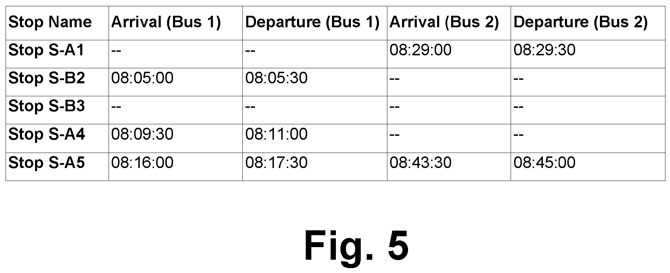

There are no more requests without passenger itineraries and Dynamic Timetable Component finishes. The Dynamic Timetable generated by the Dynamic Timetable Component is illustrated in Figure 5. In general, the generated Dynamic Timetable demonstrates the following improvements:
∘ Bus 1 finished 30 seconds earlier.
∘ Bus 2 finished 3 minutes earlier.

These improvements mean that buses can restart serving the bus line earlier to serve more passengers.
- The system continues to generate dynamic timetables for the whole transportation network.
- Given the plurality of generated dynamic timetables, the connected reservation planner confirms reservations to passengers.
- For each confirmed reservation, passenger itinerary module generates a passenger itinerary based on the dynamic timetables provided by the dynamic timetable component. Each passenger itinerary includes all stages of a trip and actions needed to be done by the passenger: wait for a notification, walk to the bus stop, board a certain Vehicle, take a certain passenger spot in the vehicle, ride, alight at a certain time and/or location, transfer or connection (if needed), walk from the bus stop to the destination location.
- Dynamic travel assistant starts using the passenger itineraries to provide guidance to respective passengers.
- Vehicle itinerary module uses dynamic timetables to create vehicle itineraries for each specific vehicle in the system. Vehicles can precisely follow their respective vehicle itineraries, because bus driver terminal provides to bus drivers detailed information both of the planned driving time between bus stops, as well as the exact time to be spent at each bus stop. An example instruction from the system delivered to a bus driver through a bus driver terminal can look like this: "Stay at this bus stop for 90 seconds, your departure time is at 08:11:30".

Essentially, the plurality of generated dynamic timetables synchronizes the movement (arrival and departure) of passengers and vehicles in the transportation network.

As can be seen from the example illustrated above, the proposed invention can plan (instead of guessing) next arrival/departure times based on how many passengers will be boarding/alighting (planned dwell time).

## Claims

1. Computer-implemented method for coordinating a passenger transit vehicle network, wherein the vehicle network comprises a plurality of vehicles operating as part of the passenger transit vehicle network, the passenger transit vehicle network comprising one or more vehicle lines, more than one vehicle transiting on each line, each line having sequentially connected vehicle stops (310), the method comprising:
- a request receiving step (S10) in which one or more passenger requests are received, each request comprising information associated with an origin location (P10a, P10b,... P10e) and a desired destination (P11a, P11b,... P11e) of a respective passenger (P1a, P1b,... P1e);
- an itinerary assigning and grouping step (S11) in which an itinerary based on the vehicle lines is assigned to each passenger (P1a, P1b,... P1e) and the passengers (P1a, P1b,... P1e) are grouped according to the respective itineraries, the groups comprising at least one common location passenger group (100) and at least one common destination passenger group (200);
- an assigning step (S12) in which a common boarding stop (302) is assigned to the at least one common location passenger group (100), a common exiting stop (303) is assigned to the at least one common destination passenger group (200), and at least one vehicle (340) is assigned to the at least one common location passenger group (100) and the at least one common destination passenger group (200); the common boarding stop (302), the common exiting stop (303) and the at least one vehicle being assigned according to at least the following parameters:
∘ an estimated arrival time of each passenger (P1a, P1b,... P1e) from the origin location (P10a, P10b,... P10e) to the common vehicle boarding stop (302);
∘ an estimated arrival time of each passenger (P1a, P1b,... P1e) from the exiting stop (303) to the desired destination (P11a, P11b,... P11e); and
∘ the location and the available passenger spots of the vehicle (301);
- an informing step (S13) in which each passenger (P1a, P1b,,... P1e) is informed about the assigned itinerary; and
- an indication step (S14) in which the assigned vehicle (301) receives an indication of the next vehicle stop that corresponds to the common boarding stop (302) or the common exiting stop (303).

2. Method according to claim 1, wherein the common boarding stop (302) and the common exiting stop (303) are assigned also according to the number of passengers who can reach to the common boarding stop (302) or the common exiting stop (303), prioritizing the common boarding stop (302) or the common exiting stop (303) with the largest number of reaching passengers.

3. Method according to any of the preceding claims, comprising a booking step in which each passenger (P1a, P1b,,... P1e) books the assigned trip.

4. Method according to any of the preceding claims, wherein in the indication step (S14) the vehicle (301) receives the indication of stopping the vehicle at the next vehicle stop in real time.

5. Method according to any of the preceding claims, wherein in the indication step (S14) the vehicle (301) receives the indication of a dwell time at each vehicle stop and/or the required vehicle circulation speed.

6. Method according to any of the preceding claims, comprising the step of dynamically reassigning the vehicle (301), the common bus boarding stop (302) and/or the common exiting stop (303) for each common location passenger group (100) or each destination passenger group (200) according to traffic information or new passenger requests.

7. Method according to claim 6, comprising an informing step (S13) in which each passenger (P1a, P1b,,... P1e) is informed about the new assigned common boarding stop (302), the new assigned vehicle, the new departure time and/or the new assigned common exiting stop (303).

8. Bus network control system comprising a passenger module unit configured to communicate with passengers and with a vehicle network module unit configured to locate and manage the plurality of vehicles, **characterised in that** the system is configured to implement the method according to any of the preceding claims.

9. Bus network control system according to any claim 8, wherein the bus network control system is configured to store historical data and is configured to use a machine learning technique for improving the efficiency of the method.

10. Computer program comprising a plurality of instructions which, when the program is executed by a computer (500), cause the computer (500) to carry out the steps of the method (1) according to any of claims 1 to 7.

11. Non-transitory computer-readable storage medium comprising a plurality of instructions which, when executed by a computer (500), cause the computer (500) to carry out the method steps (1) according to any of claims 1 to 7.
